# EUROPEAN PATENT APPLICATION

(11) **EP 4 661 585 A1**
(43) Date of publication of application: **10.12.2025**
(21) Application number: 24762994.2
(22) Date of filing: 18.02.2024
(51) Int. Cl.: H04W 76/10

(54) **CROSS-DOMAIN COMMUNICATION METHOD AND COMMUNICATION DEVICE**

(30) Priority: 01.03.2023 CN 202310239617
(71) Applicant: Huawei Technologies Co., Ltd., Shenzhen, Guangdong 518129 (CN)
(72) Inventor: LI, Hancheng, Shenzhen, Guangdong 518129 (CN); ZHOU, Han, Shenzhen, Guangdong 518129 (CN); ZHANG, Jidong, Shenzhen, Guangdong 518129 (CN); YU, Youyang, Shenzhen, Guangdong 518129 (CN)
(74) Representative: Grünecker Patent- und Rechtsanwälte PartG mbB
(86) International application number: PCT/CN2024/077431
(87) International publication number: WO 2024/179311

(57) **Abstract**

A cross-domain communication method and a communication device are provided. In the method, a first control plane network element triggers, based on an association relationship between a first terminal device and a second terminal device, a first user plane network element to establish a path with a second user plane network element. The first user plane network element establishes the path with the second user plane network element. The path is used to transmit a packet from the first terminal device to the second user plane network element, or is used to transmit a packet from the second terminal device to the first user plane network element. The second user plane network element serves the second terminal device. The first terminal device accesses a first network, and the second terminal device accesses a mobile communication network. However, because there is the association relationship between the first terminal device and the second terminal device, the path between the first user plane network element and the second user plane network element is established on a network side, to implement communication between the first terminal device and the second terminal device.

## Description

### CROSS-REFERENCE TO RELATED APPLICATIONS

This application claims priority to Chinese Patent Application No. 202310239617.8, filed with the China National Intellectual Property Administration on March 1, 2023 and entitled "CROSS-DOMAIN COMMUNICATION METHOD AND COMMUNICATION DEVICE", which is incorporated herein by reference in its entirety.

### TECHNICAL FIELD

This application relates to the field of wireless communication, and in particular, to a cross-domain communication method and a communication device.

### BACKGROUND

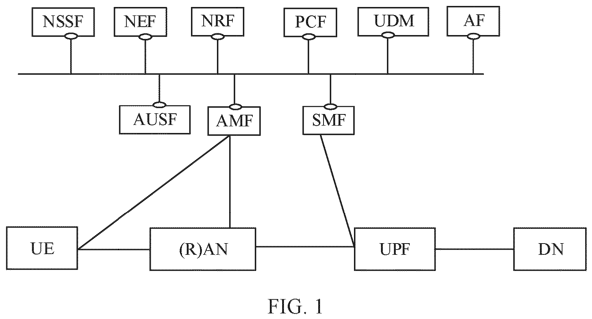

To address challenges of wireless broadband technologies and maintain a leading edge of a 3GPP network, a 3GPP standard group formulated a next-generation mobile communication network architecture (Next Generation System), referred to as a 5G network architecture, at the end of 2016. The 5G network architecture may be shown in FIG. 1.

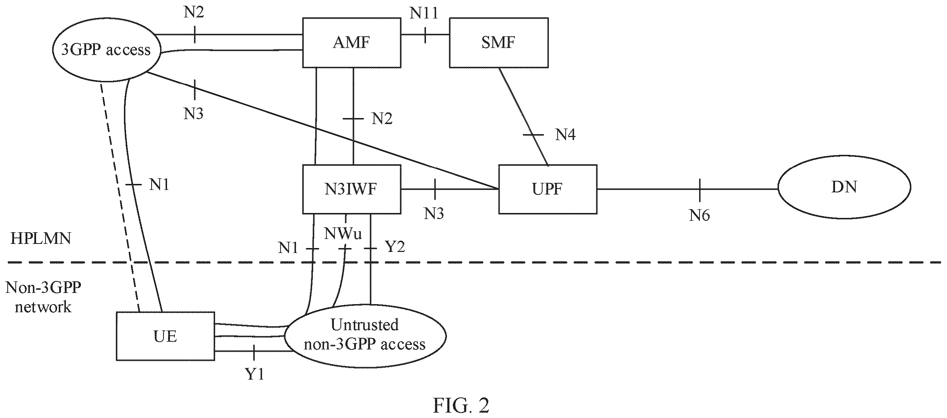

This architecture not only supports access of a radio technology (for example, LTE and 5G RAN) defined by the 3GPP standard group to a core network side (CN: 5G Core network), but also supports access of a non-3GPP access technology to the core network side by using a non-3GPP interworking function (N3IWF: non-3GPP Interworking Function) or a next generation access gateway (ngPDG: next Generation packet data Gateway). When the 5G core network supports untrusted non-3GPP (N3G for short) access, a network architecture may be shown in FIG. 2. The N3IWF is an untrusted non-3GPP access gateway, and an untrusted non-3GPP access network may be an untrusted WLAN access network.

In addition, the 5G core network further supports trusted non-3GPP access and/or wired network access. A trusted non-3GPP network includes a trusted WLAN network, and a wired network includes fixed home network access and the like. A network side architecture is similar to an untrusted non-3GPP access architecture. The untrusted non-3GPP access gateway (the N3IWF in FIG. 2) may be replaced with a trusted WLAN access gateway (Trusted Non-3GPP Gateway Function, TNGF), or may be replaced with a wireline access gateway (Wireline Access Gateway Function, W-AGF). An access network device between a user equipment and the access gateway include a WLAN AP, a wired network access network device (fixed Access network, FAN), a switch, a router, and the like.

In a conventional technology, when performing access over a home network Wi-Fi, a UE may access a 5GC/EPC converged core network via the N3IWF/TNGF defined in the 5GC or an ePDG defined in an EPC. In addition, the UE can access another termination user equipment in a home network in a home Wi-Fi environment. The termination user equipment is a user equipment that accesses a network via a home gateway (that is, an optical modem). However, when the UE moves out of home Wi-Fi coverage (which is referred to as a far-field UE in this case), the UE cannot access the termination device in the home network over a cellular network.

### SUMMARY

This application provides a cross-domain communication method and a communication device, to resolve a problem that it is difficult for a terminal device that is not in a local area network to access a terminal device in the local area network.

According to a first aspect, an embodiment of this application provides a cross-domain communication method, including: A first control plane network element triggers, based on an association relationship between a first terminal device and a second terminal device, a first user plane network element to establish a path with a second user plane network element, where the first user plane network element is a user plane network element serving the first terminal device, and the second user plane network element is a user plane network element serving the second terminal device, and the path is used to transmit a packet from the first terminal device to the second user plane network element, or is used to transmit a packet from the second terminal device to the first user plane network element.

In the foregoing method, the first user plane network element may serve a terminal device in a local area network, the second user plane network element may serve a terminal device in a mobile communication network, and the first control plane network element triggers the first user plane network element to establish the path with the second user plane network element, so that the first user plane network element can communicate with the second user plane network element. Therefore, a packet can be transmitted between the first terminal device in the local area network and the second terminal device that accesses the mobile communication network. Compared with a conventional communication manner, in the foregoing method, an application server does not need to be disposed, thereby avoiding a problem that the terminal device in the local area network cannot communicate with a terminal device outside the local area network because there is no available application server.

In a possible implementation, the method further includes: The first control plane network element receives address information, where the address information includes an address of a third terminal device and/or a first terminal device side address segment, the third terminal device is a terminal device that forwards a packet via the first terminal device, and the address information is obtained by the second user plane network element based on a packet transmitted on the path; and the first control plane network element generates a first forwarding policy based on the address information.

In a possible implementation, the method further includes: The first control plane network element sends the first forwarding policy to the second user plane network element, where the first forwarding policy indicates the second user plane network element to send, to the second terminal device, a packet from the first terminal device, or to send, to the first user plane network element, a packet that is sent by the second terminal device and whose target address belongs to the first terminal device side address segment.

In a possible implementation, the first terminal device side address segment includes a broadcast address, a multicast address, or an address of a terminal device that is other than the first terminal device and that is in a first network to which the first terminal device belongs.

In a possible implementation, the first forwarding policy includes: first indication information, where the first indication information indicates the second user plane network element to generate an address forwarding policy based on a source address of a transmission packet on the path; and/or second indication information, where the second indication information indicates the second user plane network element to send, to the first user plane network element, a packet sent by the second terminal device.

In a possible implementation, the method further includes: The first control plane network element sends a second forwarding policy to the first terminal device, where the second forwarding policy indicates the first terminal device to send a packet whose target address is an address of the second terminal device to the first user plane network element, or to replace a source address in a packet from the second terminal device with an address of the first terminal device used in the first network, and then forward the packet to a target terminal device, where the first terminal device and the target terminal device are devices in the first network, and the first network is different from a network to which the first control plane network element belongs.

In a possible implementation, the second forwarding policy includes an uplink data forwarding policy, and the uplink data forwarding policy is used, by the first terminal device, to determine, based on the forwarding policy, whether to send an uplink packet to the first user plane network element; and the uplink data forwarding policy includes one or more of the following information: a feature of data in an uplink tunnel, a protocol type of the data in the uplink tunnel, or third indication information.

In a possible implementation, the feature of the data includes: a broadcast packet, a multicast packet, or a packet whose target address is the second terminal device; and/or the third indication information indicates the first terminal device to record a correspondence between a first address and the first user plane network element when receiving a downlink packet via the first user plane network element, where the first address is a source address of the downlink packet, so that when receiving an uplink packet whose target address is the first address, the first terminal device sends the uplink packet to the first user plane network element.

In a possible implementation, that the first control plane network element triggers, based on the association relationship between the first terminal device and the second terminal device, the first user plane network element to establish the path with the second user plane network element includes: The first control plane network element determines a third user plane network element, and triggers the first user plane network element to establish a path with the third user plane network element; and the first control plane network element sends a first request to a second control plane network element, where the first request is used to request the second control plane network element to trigger the third user plane network element to establish a path with the second user plane network element.

In a possible implementation, the method further includes: The first control plane network element sends a third forwarding policy to the third user plane network element, where the third forwarding policy indicates the third user plane network element to send, to the second user plane network element, a packet from the first terminal device, or to send, to the first user plane network element, a packet that is sent by the second terminal device and whose target address belongs to the first terminal device side address segment.

In a possible implementation, the third forwarding policy includes: fourth indication information, indicating the third user plane network element to generate an address forwarding policy based on a source address of a packet transmitted on the path; and/or fifth indication information, where the fifth indication information indicates the third user plane network element to send, to the first user plane network element, a packet sent by the second terminal device.

In a possible implementation, before the first control plane network element triggers, based on the association relationship between the first terminal device and the second terminal device, the first user plane network element to establish the path with the second user plane network element, the method further includes: The first control plane network element receives a second request, where the second request is used to establish the path for the first terminal device, and the first control plane network element obtains the association relationship of the first terminal device; or the first control plane network element receives a third request, where the third request is used to establish the path for the second terminal device, and the first control plane network element obtains the association relationship of the second terminal device.

According to a second aspect, a cross-domain communication method is provided. The method includes: A first user plane network element establishes a path with a second user plane network element, where the path is used to transmit a packet from a first terminal device to the second user plane network element, or is used to transmit a packet from a second terminal device to the first user plane network element, and the second user plane network element serves the second terminal device.

In a possible implementation, the method further includes: The second user plane network element obtains an address of a third terminal device and/or a first terminal device side address segment based on a source address of a packet transmitted on the path, where the third terminal device is a terminal device that forwards a packet via the first terminal device; and the second user plane network element sends the address of the third terminal device and/or the first terminal device side address segment to a first control plane network element.

In a possible implementation, the method further includes: The second user plane network element receives a forwarding policy that is of the path and that is sent by the first control plane network element; and the second user plane network element sends a packet from the first terminal device to the second terminal device based on the forwarding policy of the path, or sends, to the first user plane network element on the path, a packet that is sent by the second terminal device and whose target address belongs to the first terminal device side address segment.

In a possible implementation, the first terminal device side address segment includes a broadcast address, a multicast address, or an address of a terminal device in a first network to which the first terminal device belongs.

In a possible implementation, the forwarding policy of the path includes: a learning policy, where the learning policy indicates the second user plane network element to learn the source address of a packet transmitted on the path, and generate an address forwarding policy based on an address obtained through learning; and/or second indication information, where the second indication information indicates the second user plane network element to send, to the first user plane network element, a packet sent by the second terminal device.

According to a third aspect, a cross-domain communication method is applied to a first device. The method includes: A first terminal device establishes a tunnel with a first user plane network element; and the first terminal device sends a packet whose target address is a second terminal device to the first user plane network element based on a forwarding policy; or replaces a source address in a packet from the second terminal device with an address of the first terminal device used in a first network, and then forwards the packet to a target terminal device, where the first terminal device and the target terminal device are devices in the first network, the first network is different from a network to which a first control plane network element belongs, and the second terminal device is associated with the first terminal device.

In a possible implementation, the forwarding policy is sent by the first user plane network element or the first control plane network element, and the first control plane network element is a control plane network element serving the first terminal device.

In a possible implementation, the forwarding policy includes an uplink data forwarding policy, and the uplink data forwarding policy includes one or more of the following information: a feature of data in an uplink tunnel, a protocol type of the data in the uplink tunnel, or a learning policy.

In a possible implementation, the feature of the data includes: a broadcast packet, multicast data, or a packet whose target address is the second terminal device; and/or the learning policy indicates the first device to record a correspondence between a first address and the first user plane network element when receiving a downlink packet via the first user plane network element, where the first address is a source address of the downlink packet, so that when receiving an uplink packet whose target address is the first address, the first terminal device sends the uplink packet to the first user plane network element.

According to a fourth aspect, a cross-domain communication method is provided. The method includes: A first control plane network element triggers, based on an association relationship between a first terminal device and a second terminal device, a first user plane network element to establish a path with a second user plane network element, where the first user plane network element is a user plane network element serving the first terminal device, and the second user plane network element is a user plane network element serving the second terminal device; and the first user plane network element establishes the path with the second user plane network element, where the path is used to transmit a packet from the first terminal device to the second user plane network element, or is used to transmit a packet from the second terminal device to the first user plane network element, and the second user plane network element serves the second terminal device.

In a possible implementation, the method further includes: The first terminal device establishes a tunnel with the first user plane network element; and the first terminal device sends a packet whose target address is the second terminal device to the first user plane network element based on a forwarding policy; or replaces a source address in a packet from the second terminal device with an address of the first terminal device used in a first network, and then forwards the packet to a target terminal device, where the first terminal device and the target terminal device are devices in the first network, and the first network is different from a network to which the first control plane network element belongs.

According to a fifth aspect, an embodiment of this application provides a communication device. The communication device includes a processor, and a memory and a communication interface that are separately coupled to the processor. The communication interface is configured to communicate with another device. The processor is configured to run instructions or a program in the memory, and perform, through the communication interface, the method according to any one of the first aspect and the possible implementations of the first aspect.

According to a sixth aspect, an embodiment of this application provides a communication device. The communication device includes a processor, and a memory and a communication interface that are separately coupled to the processor. The communication interface is configured to communicate with another device. The processor is configured to run instructions or a program in the memory, and perform, through the communication interface, the method according to any one of the second aspect and the possible implementations of the second aspect.

According to a seventh aspect, an embodiment of this application provides a communication device. The communication device includes a processor, and a memory and a communication interface that are separately coupled to the processor. The communication interface is configured to communicate with another device. The processor is configured to run instructions or a program in the memory, and perform, through the communication interface, the method according to any one of the third aspect and the possible implementations of the third aspect.

According to an eighth aspect, an embodiment of this application provides a communication system, including the communication device according to the fifth aspect, the communication device according to the sixth aspect, and the communication device according to the seventh aspect.

According to a ninth aspect, an embodiment of this application provides a computer-readable storage medium. The computer-readable storage medium stores instructions. When the instructions run on a computer, the computer is enabled to perform the method according to any one of the first aspect and the implementations of the first aspect, or perform the method according to any one of the second aspect and the implementations of the second aspect, or perform the method according to any one of the third aspect and the implementations of the third aspect.

According to a tenth aspect, an embodiment of this application provides a computer program product including instructions. When the instructions run on a computer, the computer is enabled to perform the method according to any one of the first aspect and the implementations of the first aspect, or perform the method according to any one of the second aspect and the implementations of the second aspect, or perform the method according to any one of the third aspect and the implementations of the third aspect.

### BRIEF DESCRIPTION OF DRAWINGS

FIG. 1 is a diagram of a network architecture according to an embodiment of this application;
FIG. 2 is a diagram of another network architecture according to an embodiment of this application;
FIG. 3 is a diagram of communication of a far-field user equipment according to an embodiment of this application;
FIG. 4 is a diagram of a 5GC/EPC converged core network according to an embodiment of this application;
FIG. 5 is a diagram of still another network architecture according to an embodiment of this application;
FIG. 6 is a schematic flowchart of a cross-domain communication method according to an embodiment of this application;
FIG. 7A to FIG. 7D are a schematic flowchart of another cross-domain communication method according to an embodiment of this application;
FIG. 8(a) and FIG. 8(b)-1 to FIG. 8(b)-3 are schematic flowcharts of still another cross-domain communication method according to an embodiment of this application;
FIG. 9(a) and FIG. 9(b) are schematic flowcharts of still another cross-domain communication method according to an embodiment of this application;
FIG. 10(a) and FIG. 10(b)-1 and FIG. 10(b)-2 are schematic flowcharts of still another cross-domain communication method according to an embodiment of this application;
FIG. 11 is a diagram of a structure of a communication apparatus according to an embodiment of this application; and
FIG. 12 is a diagram of a communication apparatus device according to an embodiment of this application.

### DESCRIPTION OF EMBODIMENTS

In a current communication technology, when a UE moves out of coverage of a WLAN, because there is a firewall in the WLAN, a far-field UE cannot access a user equipment in the WLAN in a far field. For example, the WLAN may be a home WLAN, and a firewall may be disposed in a home gateway. In this case, the far-field UE cannot access a termination user equipment in a home network, for example, a tablet computer, a smart television, a smart refrigerator, or a smart meter. Specifically, the termination user equipment obtains an IP address via the home gateway, and the termination user equipment encapsulates the IP address, as a source IP address, into a data packet and sends the data packet to the network. When the data packet passes through the gateway, the firewall in the gateway replaces the source IP address of the data packet with a new IP address, and then sends the data packet to a target device indicated by a destination IP address, that is, network address translation (network address translation, NAT). For a data packet sent from the outside to the home network, the firewall allows only a data packet replied by the target device to the termination user equipment to pass through. For a data packet sent by another device, for example, the far-field UE, the far-field UE cannot obtain a new IP address (that is, an IP address obtained through NAT translation) of the termination device. Even if the UE can obtain the new IP address of the termination device, the firewall intercepts the data packet. Therefore, the data packet sent by the far-field UE to the termination user equipment in the home network cannot pass through the firewall. As a result, the far-field UE cannot access the termination user equipment in the home network.

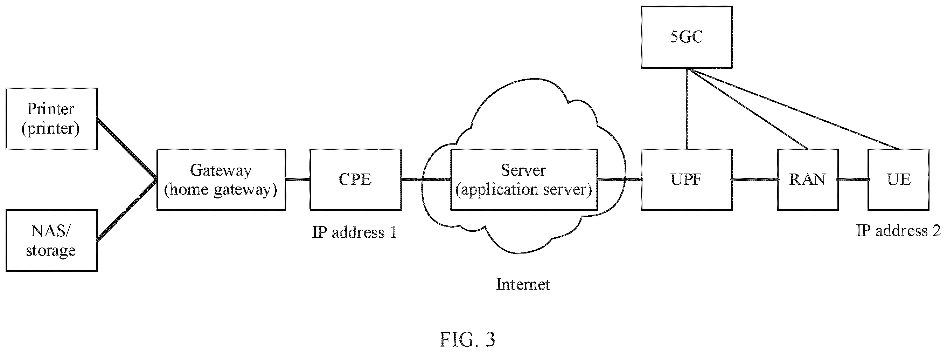

FIG. 3 provides a solution to a problem that a UE cannot access a termination user equipment in a home network. As shown in FIG. 3, the termination user equipment in the home network accesses a home gateway (gateway) in a wireless or wired manner, the home gateway allocates an IP address in the home network to each termination user equipment, and the home gateway accesses the internet (internet) via a network customer premise equipment (customer premise equipment, CPE). The CPE may access the internet over a fixed network, and is allocated with an IP address 1 in a public network. A far-field user equipment (the UE in FIG. 3) may access the internet over a 5G mobile communication network, and is allocated with an IP address 2 in the public network. In FIG. 3, that the home gateway and the CPE are separately deployed is used as an example. In actual application, the home gateway and the CPE may also be deployed together.

In the implementation solution shown in FIG. 3, an application server (server) is deployed in the internet, and when a printer (printer) in the home network is started, the printer may be connected to the application server. The printer may use an IP address in the home network as a source address to send a packet to the application server. When a packet passes through the CPE, the CPE replaces the original address with the IP address 1 of the CPE in the public network. In addition, the CPE may further replace port information in the packet, record a correspondence between the IP address and the port information obtained before replacement and the IP address and the port information obtained after replacement, and then send the packet to the application server. When the far-field user equipment needs to access the printer in the home network, the far-field user equipment sends a packet to the application server, where the packet may include identification information of an application layer. The application server may determine, based on the identification information of the application layer, the printer that the far-field user equipment needs to access, and send the packet sent by the far-field user equipment to the CPE. After receiving the packet, the CPE replaces, based on the recorded correspondence, a destination IP address in the packet with the IP address of the printer in the home network, and then sends the packet to the printer.

In the solution shown in FIG. 3, the application server needs to be deployed in the internet, to implement communication between the printer in the home network and the far-field user equipment. However, the application server can support only a specific application, that is, communication can be performed by using the foregoing solution only when an application supported by the application server is installed on both the termination device and the far-field user equipment in the home network. Therefore, this solution has a small quantity of application scenarios, and cannot meet a communication requirement of a user.

In view of this, an embodiment of this application provides a cross-domain communication method, used for communication between a far-field user equipment and a device in a local area network.

In the cross-domain communication method provided in this embodiment of this application, the local area network (for example, a home network) has a function of accessing a mobile communication network. For example, a home user equipment (home UE, H-UE) is an access point device deployed at a user's home, and supports wired access and/or WLAN access. In addition, the H-UE may further support a 5G/4G cellular access technology. In this case, the HUE may access a 5GC or an EPC via a cellular base station. Specifically, the H-UE accesses the 5GC or the EPC in the following three manners.
(1) When an N3IWF or a TNGF is deployed on a network side, the H-UE accesses the 5GC network through the N3IWF or the TNGF. As shown in FIG. 1, the 5GC network may include the following network elements.

User plane network element function (user plane function, UPF): It is mainly responsible for user plane-related functions such as data packet routing and forwarding, packet detection, service usage reporting, QoS handling, uplink packet detection, and downlink data packet storage.

Access and mobility management function (access and mobility management function, AMF): Main functions of the AMF include access and mobility-related functions such as connection management, mobility management, registration management, access authentication and authorization, reachability management, and security context management.

Session management function (session management function, SMF): It is mainly responsible for session-related functions such as session management (for example, session establishment, modification, and release, including tunnel maintenance between a UPF and a RAN), UPF selection and control, service and session continuity (service and session continuity, SSC) mode selection, and roaming.

Policy control function (policy control function, PCF): It is mainly responsible for policy-related functions such as formulating a unified policy, providing policy control, and accessing subscription information relevant for a policy decision in a UDR.

Data network (data network, DN): It is mainly responsible for providing a data transmission service for a terminal, and may be a public data network (public data network, PDN), for example, the internet (internet), or may be a local access data network (local access data network, LADN), for example, a campus DN.

Authentication server function (authentication server function, AUSF): It is mainly responsible for performing authentication on user equipment to determine legality of the user equipment.

Unified data management (unified data management, UDM): It is mainly responsible for storing subscription data of a user equipment.

Application function (application function, AF): It is mainly responsible for sending an application-related requirement to a PCF, so that the PCF can generate a corresponding policy.

The foregoing "network element" may also be referred to as an "entity" or an "apparatus". This is not limited in this application. In actual deployment, the network elements may be co-located. When two network elements are co-located, interaction between the two network elements provided in embodiments of this application becomes an internal operation of a co-located network element or may be omitted. It should be understood that FIG. 1 provides only an example of the 5GC network architecture that can be applied to this embodiment of this application. In actual application, more or fewer network elements may be included than those in FIG. 1.

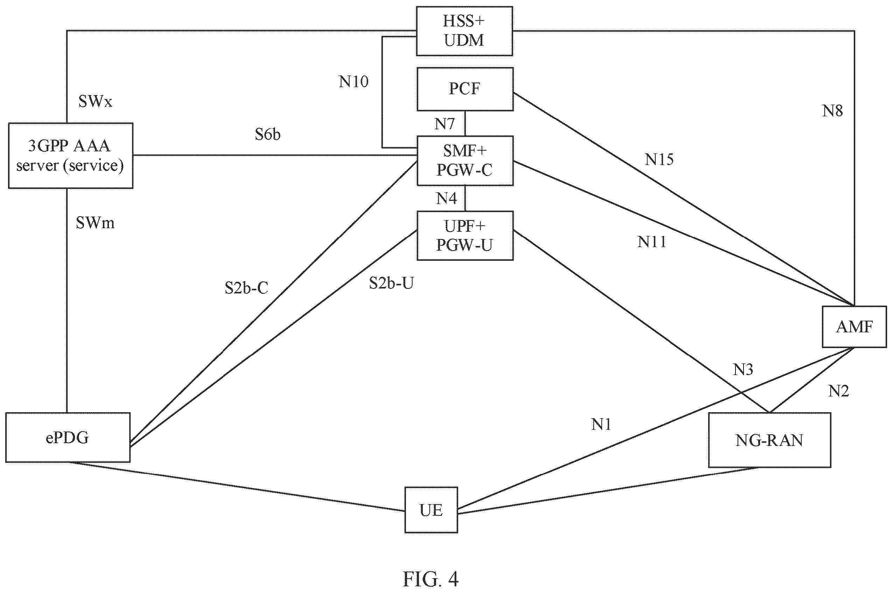

(2) When an evolved packet data gateway (evolved packet data gateway, ePDG) is deployed on a network side, a core network is a core network in which the 5GC and the EPC are converged, which is subsequently referred to as a converged 5GC/EPC network. As shown in FIG. 4, the 5GC/EPC converged core network may include the following network elements: an AMF, a home subscriber server (home subscribe user, HSS)+SMF (indicating that the HSS and the SMF can be co-located), a PCF, an SMF+packet data network gateway control plane (PGW-C) (indicating that the SMF and the PGW-C can be co-located), a UPF+packet data network gateway data plane (PGW-U) (indicating that the SMF and the PGW-U can be co-located), and 3GPP authentication, authorization, and accounting (authentication, authorization, and accounting, AAA). A UE can access the 5GC/EPC converged core network over a next-generation radio access network (next generation radio access network, NG-RAN) or via the ePDG.

The foregoing "network element" may also be referred to as an "entity" or an "apparatus". This is not limited in this application. In actual deployment, the network elements may be co-located. When two network elements are co-located, interaction between the two network elements provided in embodiments of this application becomes an internal operation of a co-located network element or may be omitted. It should be understood that FIG. 4 provides only an example of the 5GC/EPC converged network that can be applied to this embodiment of this application. In actual application, more or fewer network elements may be included than those in FIG. 4.

(3) When the H-UE supports 5G new radio (new radio, NR) access, the H-UE accesses a 5GC core network over an NG-RAN.

In other words, the core network in this embodiment of this application is a 5GC/EPC converged core network, or the 5GC network, or may be a core network in a future mobile communication system.

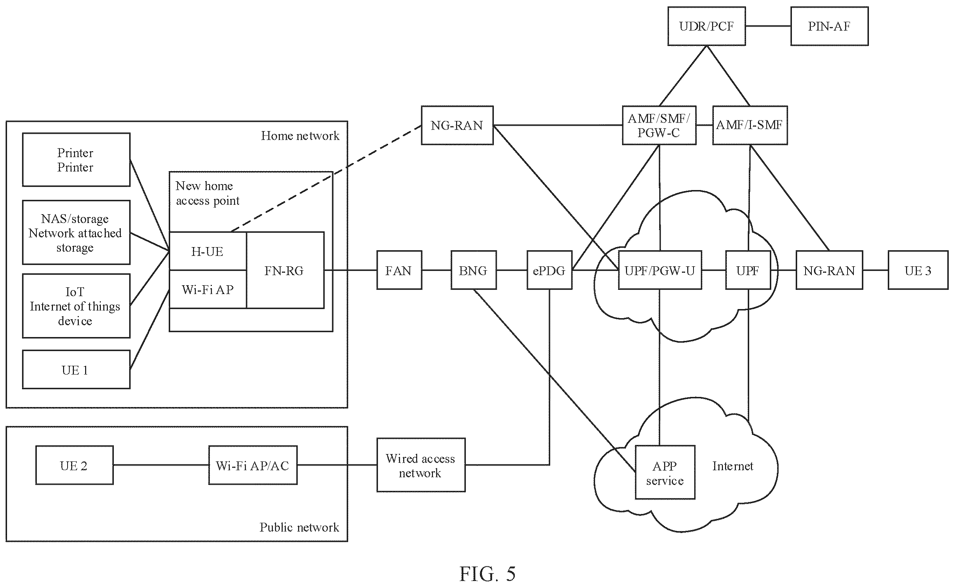

For example, the H-UE accesses the 5GC/EPC converged network via the ePDG. A network architecture to which the cross-domain communication method provided in this embodiment of this application is applicable may be shown in FIG. 5. A termination user equipment (for example, a printer (printer), a network attached storage (NAS storage), an internet of things device (internet of things, IoT), and a UE 1) in a home network may access a network via the access point device H-UE. The H-UE can access the 5GC/EPC converged network via a fixed home gateway (fixed network RG, FN-RG), a fixed access network (fixed access network, FAN), a broadband network gateway (broadband network gateway, BNG), or an ePDG.

A UE 3 is a far-field user equipment, and accesses the 5GC/EPC converged core network over a RAN. In a current communication technology, the UE 3 cannot access the termination user equipment in the home network. However, after the cross-domain communication method provided in this embodiment of this application is applied, the UE 3 can access the termination user equipment in the home network.

A UE 2 is a user equipment of another WLAN network (for example, a public area WLAN), and the WLAN network in which the UE 2 is located may be connected to the ePDG over a wireline access network.

As described above, the H-UE may alternatively access the 5GC core network through an N3IWF or a TNGF, and the ePDG in FIG. 5 may be replaced with the N3IWF or the TNGF. The H-UE may alternatively access the 5GC core network over an NG-RAN, and the ePDG in FIG. 5 may be replaced with the NG-RAN.

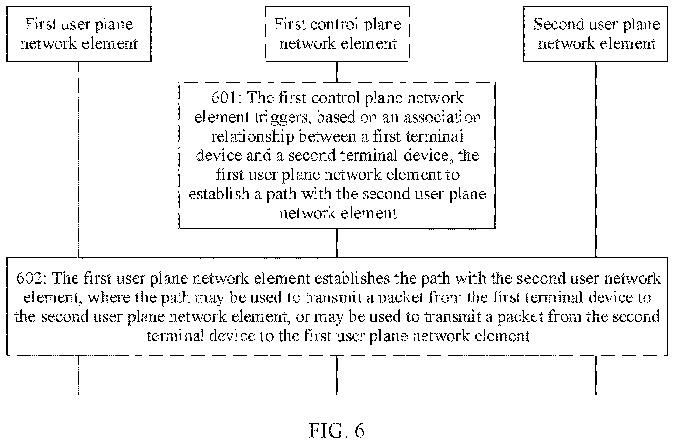

FIG. 6 shows a cross-domain communication method according to an embodiment of this application. As shown in the figure, the method relates to the following network elements.

A first terminal device is a terminal device deployed in a first network (a non-mobile communication network, for example, a local area network in a home or an enterprise). For example, the first terminal device may be a home H-UE deployed in a home local area network. The first terminal device may be a terminal device having an access point function. For example, another terminal device in the first network accesses the first network via the first terminal device. Alternatively, the first terminal device may be a terminal device connected to an access point device in the first network, and another terminal device in the first network does not need to be connected to the first terminal device. However, the access point device in the first network may forward a packet sent by the another terminal device to the first terminal device, so that the first terminal device processes the packet and sends the processed packet to the access point device. Alternatively, the first terminal device may be a functional module deployed on a terminal device, or a functional module deployed on an access point device or a gateway device. Generally, the first terminal device has no communication requirement, and a main function of the first terminal device is to implement communication between the terminal device in the first network and a terminal device outside the first network over a mobile communication network.

A second terminal device is a terminal device that accesses a mobile communication network and does not access the first network. Because the second terminal device does not access the first network, in an existing communication solution, the second terminal device cannot communicate with a terminal device in the first network. However, in this embodiment of this application, the second terminal device may communicate with the terminal device in the first network over the mobile communication network.

A third terminal device is a terminal device that accesses a first network. For example, the third terminal device may be a mobile phone, a computer, a tablet computer, a printer, or a smart home device.

A first user plane network element is a user plane network element serving a first terminal device. The first user plane network element may be a gateway device deployed in a mobile network, or may be an evolved data packet gateway (evolved Packet Data Gateway, ePDG), or may be a UPF in a 5GC network, or may be a network element configured to perform user plane management on a terminal device in another mobile communication system.

A tunnel may be established between the first terminal device and the first user plane network element, so that the first terminal device sends a packet of another terminal device in a first network to the first user plane network element through the tunnel. Therefore, the first user plane network element sends the packet to a second terminal device in a mobile communication network over the mobile communication network. For example, when the first user plane network element is an ePDG, an IP-Sec tunnel, a GTP-U tunnel, or a virtual extended local area network (virtual extensible local area network, VxLAN) may be established between the first terminal device and the ePDG.

A second user plane network element is a user plane network element serving a second terminal device. The second user plane network element may be a UPF in a 5GC network, or may be a network element configured to perform user plane management on a terminal device in another mobile communication system.

A first control plane network element is a control plane network element serving a first terminal device. Further, the first control plane network element may be a control plane network element serving a second terminal device, that is, the first terminal device and the second terminal device have a same control plane network element. Certainly, the first terminal device and the second terminal device may also have different control plane network elements. In this case, the first control plane network element is the control plane network element of the first terminal device. The first control plane network element may be an SMF in a 5GC network, or may be another network element configured for control plane management. The first control plane network element is deployed in a mobile communication network.

As shown in FIG. 6, the cross-domain communication method provided in this embodiment of this application may include the following steps.

Step 601: A first control plane network element triggers, based on an association relationship between a first terminal device and a second terminal device, a first user plane network element to establish a path with a second user plane network element.

The first control plane network element may be triggered by a request to perform the foregoing step. For example, the first control plane network element may perform the foregoing step after receiving a second request used to request to establish the path for the first terminal device. The second request is sent by the first user plane network element. Alternatively, the first control plane network element may perform the foregoing step after receiving a third request used to request to establish the path for the second terminal device. The third request may be sent by a second control plane network element, and the second control plane network element is a control plane network element serving the second terminal device.

Alternatively, the first control plane network element does not need to be triggered by a request to perform the foregoing step. For example, when the first control plane network element serves both the first terminal device and the second terminal device, the first control plane network element may automatically establish the path for the second terminal device after the second terminal device accesses a network, that is, perform the foregoing step.

The association relationship between the first terminal device and the second terminal device may be a group relationship, that is, the first terminal device and the second terminal device belong to a same group; or the second terminal device may be a primary device, and the first terminal device and a third terminal device are affiliated to the second terminal device. The first control plane network element may obtain the association relationship between the first terminal device and the second terminal device based on subscription data of the first terminal device or the second terminal device. For example, after the first control plane network element receives the request for establishing the path for the first terminal device, the first control plane network element may obtain subscription data of the first terminal device from unified data management (unified data management, UDM), where the subscription data includes an identifier of a terminal device that has an association relationship with the first terminal device. For another example, after the first control plane network element receives the request for establishing the path for the second terminal device, the first control plane network element may obtain subscription data of the second terminal device from UDM, where the subscription data includes indication information indicating that there is the association relationship between the second terminal device and the first terminal device.

When triggering the first user plane network element to establish the path with the second user plane network element, the first control plane network element may send an IP address of the second terminal device to the first user plane network element, so that the first user plane network element determines, based on the IP address of the second terminal device, a second user plane network element corresponding to the second terminal device. Alternatively, the first control plane network element may send an IP address of the first terminal device to the second user plane network element, so that the second user plane network element determines a corresponding first user plane network element based on the IP address of the first terminal device. Alternatively, the first control plane network element may send an identifier of the second user plane network element to the first user plane network element, or send an identifier of the first user plane network element to the second user plane network element, so that the first user plane network element can establish the path with the second user plane network element.

Step 602: The first user plane network element establishes the path with the second user network element.

The established path between the first user plane network element and the second user plane network element may be used to transmit a packet from the first terminal device to the second user plane network element, so that the second user plane sends the packet to the second terminal device. Alternatively, the path may be used to transmit a packet from the second terminal device to the first user plane network element, so that the first user plane network element sends the packet to the first terminal device. The path may be an IP-Sec tunnel, an N9 tunnel, or a transmission path in another form. An implementation of the path is not limited in embodiments of this application.

For ease of description, the path between the first user plane network element and the second user plane network element is referred to as a first path below.

In a design, the first path may be a first path directly established between the first user plane network element and the second user plane network element. For example, when the first control plane network element triggers to establish the first path, the second terminal device has accessed a mobile communication network. In this case, the first control plane network element can determine the second user plane network element serving the second terminal device, and therefore the first control plane network element may trigger the first user plane network element to directly establish the first path with the second user plane network element.

In another design, the first path may also be a path established between the first user plane network element and the second user plane network element via a third user plane network element. In other words, the first path is: the first user plane network element-the third user plane network element the second user plane network element. For example, the first control plane network element first selects the third user plane network element for the first terminal device, triggers the first user plane network element to establish a path with the third control plane network element, and triggers the third control plane network element to establish a path with the second user plane network element. For another example, when the first control plane network element triggers to establish the first path, the second terminal device has not accessed a mobile communication network. In this case, the first control plane network element may first determine the third user plane network element, and trigger the first user plane network element to establish a path with the determined third user plane network element. After the second terminal device accesses the mobile communication network, the second control plane network element (for example, an SMF serving the second terminal device) serving the second terminal device triggers, based on the correspondence between the first terminal device and the second terminal device, the third user plane network element to establish a path with the second control plane network element serving the second terminal device, so as to complete establishment of the first path.

Optionally, when the first control plane network element triggers the third user plane network element to establish the path with the second user plane network element, the first control plane network element may send a first request to the second control plane network element serving the second terminal device, to request the second control plane network element to trigger the third user plane network element to establish the path with the second user plane network element, so as to complete establishment of the first path. Alternatively, when the second control plane network element triggers the third user plane network element to establish the path with the second user plane network element, the second control plane network element may send a request to the first control plane network element, to request the first control plane network element to trigger the third user plane network element to establish the path with the second user plane network element, so as to complete establishment of the first path.

The first path may be established in a plurality of manners. For example, an IP-Sec tunnel or a session may be established between the first user plane network element and the second user plane network element. Alternatively, if both the first user plane network element and the second user plane network element are UPFs, an N19 tunnel or an N9 tunnel may be established between the first user plane network element and the second user plane network element. For another example, an IP-Sec tunnel may be established between the first user plane network element and the third user plane network element, and an IP-Sec tunnel may also be established between the third user plane network element and the second user plane network element.

Before or after step 602, the first control plane network element may further generate a first forwarding policy related to the first path, and the first forwarding policy is used by the second user plane network element to forward a packet. Specifically, the first control plane network element may obtain address information, including an address of the third terminal device and/or a first terminal device side address segment, and then the first control plane network element may generate the first forwarding policy of the first path based on the obtained address information. The address of the third terminal device may be address information of the third terminal device in a first network. The first terminal device side address segment may include a network segment or prefix information of the first network. For example, if the first network uses an IPv4 address, the first terminal device side address segment may be represented as a subnet mask of the first network; or if the first network uses an IPv6 address, the first terminal device side address segment may be represented as the prefix information of the first network. In addition, the first terminal device side address segment may further include a broadcast address, a multicast address, or another predetermined address corresponding to the first network. For example, when the second terminal device sends a packet to the third terminal device in the first network for the first time, the second terminal device may not know the address information of the third terminal device. Therefore, the second terminal device may send a broadcast packet or a multicast packet, so that when the packet is sent to the first terminal device, the first terminal device sends the packet in a broadcast or multicast manner. Therefore, the third terminal device can receive the packet.

Optionally, the first control plane network element may obtain the address information from the first terminal device or the first user plane network element. For example, the first terminal device may send, to the first control plane network element via the first user plane network element, an address (which may include the address of the third terminal device or addresses of more terminal devices) of a terminal device accessing the first network or the first terminal device side address segment. For another example, after establishing a tunnel with the first terminal device, the first user plane network element may also send an address of a terminal device accessing the first network or the first terminal device side address segment to the first control plane network element, so that the first control plane network element can generate the first forwarding policy of the first path based on the obtained address information.

Alternatively, the first user plane network element and the second user plane network element may perform learning based on a packet transmitted on the first path and learn a source address and/or a target address in the packet, and then both the first user plane network element and the second user plane network element may send learned address information to the first control plane network element, so that the first control plane network element generates the forwarding policy of the first path based on the address information. For example, a packet sent by the third terminal device to the second terminal device may be transmitted on the first path, and a source address of the packet is the address of the third terminal device. After receiving the packet on the first path, the second user plane network element may read source address information in the packet, which is denoted as a first address herein, to determine that a packet related to the first address may be transmitted on the first path, and send the first address, that is, the address of the third terminal device, to the first control plane network element. For another example, after receiving a packet whose source address is the third terminal device, the second user plane network element may learn address segment information of the first network based on source address information, that is, information about the first terminal device side address segment, and send the learned information about the first terminal device side address segment to the first control plane network element.

After generating the first forwarding policy of the first path based on the obtained address information, the first control plane network element may send the first forwarding policy to the second user plane network element, so that the second user plane network element sends a packet from the first terminal device to the second terminal device based on the first forwarding policy, or sends, to the first user plane network element, a packet that is sent by the second terminal device and whose target address belongs to the first terminal device side address segment. The packet from the first terminal device is actually a packet from a terminal device that has a communication requirement in the first network, for example, the packet sent by the third terminal device. However, because a packet in the first network needs to be forwarded or processed by the first terminal device, a packet from the first network may be referred to as a packet from the first terminal device.

The first forwarding policy generated by the first control plane network element may include a correspondence between the address of the third terminal device and/or the first terminal device side address segment and the first user plane network element. After receiving the first forwarding policy, the second user plane network element may directly forward, based on the correspondence, a packet whose target address is the address of the third terminal device or whose target address belongs to the first terminal device side address segment to the first user plane network element.

Alternatively, the first forwarding policy generated by the first control plane network element may include first indication information and/or second indication information. The first indication information indicates the second user plane network element to generate an address forwarding policy based on a source address of a packet transmitted on the first path. Specifically, the second user plane network element records a correspondence between the source address of the packet transmitted on the path and the first user plane network element, and generates the address forwarding policy based on the correspondence. The address forwarding policy specifically means that when receiving a packet whose target address is the source address, the second user plane network element forwards the packet to the first user plane network element based on the recorded correspondence. For example, the second user plane network element receives, on the first path, a packet forwarded by the first user plane network element, and a source address of the packet is the third terminal device. In this case, when the second user plane network element records a correspondence between the address of the third terminal device and the first user plane network element, when subsequently receiving a packet whose target address is the third terminal device, the second user plane network element forwards the packet to the first user plane network element. The second indication information indicates the second user plane network element to send, to the first user plane network element, a packet sent by the second terminal device. Further, the second indication information may indicate the second user plane network element to send, to the first user plane network element, a broadcast or multicast packet sent by the second terminal device.

In a possible implementation, the first control plane network element may further generate a second forwarding policy related to the first path, and the second forwarding policy is used by the first terminal device to forward a packet. Specifically, the first control plane network element may generate the second forwarding policy of the first path based on obtained address information, including an address of the second terminal device and/or the first terminal device side address segment. As described above, the first terminal device side address segment may include the network segment of the first network and the prefix information of the first network, or may further include the broadcast address, the multicast address, or the another predetermined address corresponding to the first network. Alternatively, the first terminal device may perform learning on a packet transmitted on the first path and learn a source address and/or a target address in the packet, and then the first terminal device may send learned address information to the first control plane network element via the first user plane network element, so that the first control plane network element generates the second forwarding policy of the first path based on the address information.

After generating the second forwarding policy of the first path based on the obtained address information, the first control plane network element may send the second forwarding policy to the first terminal device, so that the first terminal device sends, to the first user plane network element based on the second forwarding policy, a packet whose target address is the second terminal device, or the first terminal device replaces a source address in a packet from the second terminal device with an address of the first terminal device used in the first network, and then sends the packet to a target terminal device.

The second forwarding policy generated by the first control plane network element may include a correspondence between the address of the second terminal device and the first user plane network element. After receiving the second forwarding policy, the first terminal device may directly forward, to the first user plane network element based on the correspondence, a packet whose target address is the address of the second terminal device, so that the first user plane network element sends the packet to the second user plane network element via the first path. Therefore, the second user plane network element sends the packet to the second terminal device.

The second forwarding policy generated by the first control plane network element may further include an uplink data forwarding policy, so that the first terminal device sends an uplink packet to the first user plane network element based on the uplink data forwarding policy. In this embodiment of this application, the uplink packet is a packet sent by a terminal device (for example, the third terminal device) in the first network to a terminal device (for example, the second terminal device) in the mobile communication network. After receiving a packet, the first terminal device determines, based on a destination address in the packet, that the packet is a packet sent to the second terminal device, that is, the packet is an uplink packet. In this case, the first terminal device determines, based on the uplink data forwarding policy, to send the uplink packet to the first user plane network element. If a source address of the packet received by the first terminal device is the third terminal device, and a target address is a fourth terminal device in the first network, the packet is not an uplink packet, and the first terminal device sends the packet to the fourth terminal device instead of the first user plane network element.

Specifically, the data forwarding policy may include one or more of the following information: a feature of data in an uplink tunnel, a protocol type of the data in the uplink tunnel, or third indication information. In this embodiment of this application, the tunnel is a tunnel between the first terminal device and the first user plane network element, and a transmission direction is from the first terminal device to the first user plane network element.

The feature of data in an uplink tunnel may include a broadcast packet, a multicast packet, or a packet whose destination address is the second terminal device. For example, when the third terminal device sends a packet to the second terminal device for the first time, the third terminal device may not know the address of the second terminal device. In this case, the third terminal device may send a broadcast packet or a multicast packet. After receiving the packet, the first terminal device determines, based on the feature of data in an uplink tunnel, to send the broadcast packet or the multicast packet to the first user plane network element. It should be understood that the first control plane network element may not configure the feature of data in an uplink tunnel. In this case, after receiving a broadcast or multicast packet, the first terminal device may send the packet in a broadcast or multicast manner, and copy the packet and forward the packet through the first tunnel. In other words, the first terminal device sends the copied packet to the first user plane network element.

The protocol type of the data in the uplink tunnel indicates a protocol type of a packet that is allowed to be forwarded by the first terminal device to the first user plane network element, for example, may include a service discovery protocol and a dynamic address allocation protocol. For example, when the first terminal device receives a packet sent by the third terminal device, if the packet is a broadcast packet or a multicast packet, and a protocol type of the packet is a service discovery protocol, the first terminal device may forward the packet to the first user plane network element.

The third indication information may indicate the first terminal device to record, when the first terminal device receives a downlink packet via the first user plane network element, a correspondence between a source address (denoted as a second address) in the downlink packet and a path (the path is a tunnel between the first terminal device and the first user plane network element) for receiving the downlink packet. In this way, in a subsequent communication process, if receiving an uplink packet whose target address is the second address, the first terminal device may send the uplink packet to the first user plane network element through the tunnel between the first terminal device and the first user plane network element based on the correspondence.

As described above, the first path may include the first user plane network element, the third user plane network element, and the second user plane network element. In this case, the first control plane network element may further generate a third forwarding policy related to the first path, and the third forwarding policy is used by the third user plane network element to forward the packet. Then, the first control plane network element may send the third forwarding policy to the third user plane network element, so that the third user plane network element forwards the packet based on the third forwarding policy. Specifically, the first control plane network element may generate the third forwarding policy of the first path based on obtained address information, including an address of the second terminal device and/or a first terminal device side address segment.

The third forwarding policy generated by the first control plane network element may include a correspondence between the source address being the first terminal device side address segment and the second user plane network element. In this case, after receiving a packet from the first terminal device, the third user plane network element may forward the packet to the second user plane network element based on the correspondence. Alternatively, the third forwarding policy may include a correspondence between the target address being the second terminal device and the second user plane network element. In this case, after receiving a packet whose target address is the second terminal device, the third user plane network element may forward the packet to the second user plane network element based on the correspondence, so that the second user plane network element sends the packet to the second terminal device. Alternatively, the third forwarding policy may include a correspondence between the target address belonging to the first terminal device side address segment and the first user plane network element. After receiving a packet whose target address belongs to the first terminal device side address segment, the third user plane network element may forward the packet to the first user plane network element based on the correspondence. Alternatively, the third forwarding policy may include a correspondence between the first user plane network element, and the source address being the second terminal device and the target address belonging to the first terminal device side address segment. In this case, when the third user plane network element receives a packet from the second terminal device, and the target address of the packet belongs to the first terminal device side address segment, the third user plane network element may forward the packet to the first user plane network element based on the correspondence.

Alternatively, the third forwarding policy generated by the first control plane network element may include fourth indication information and/or fifth indication information. The fourth indication information indicates the third user plane network element to generate an address forwarding policy based on a source address of a packet transmitted on the path. For example, the third user plane network element receives, on the first path, a packet forwarded by the first user plane network element, and a source address of the packet is the third terminal device. In this case, when the third user plane network element records a correspondence between the address of the third terminal device and the first user plane network element, when subsequently receiving a packet whose target address is the third terminal device, the second user plane network element forwards the packet to the first user plane network element. The fifth indication information indicates the third user plane network element to send, to the first user plane network element, a packet sent by the second terminal device. Further, the fifth indication information may indicate the third user plane network element to send, to the first user plane network element, a broadcast or multicast packet sent by the second terminal device.

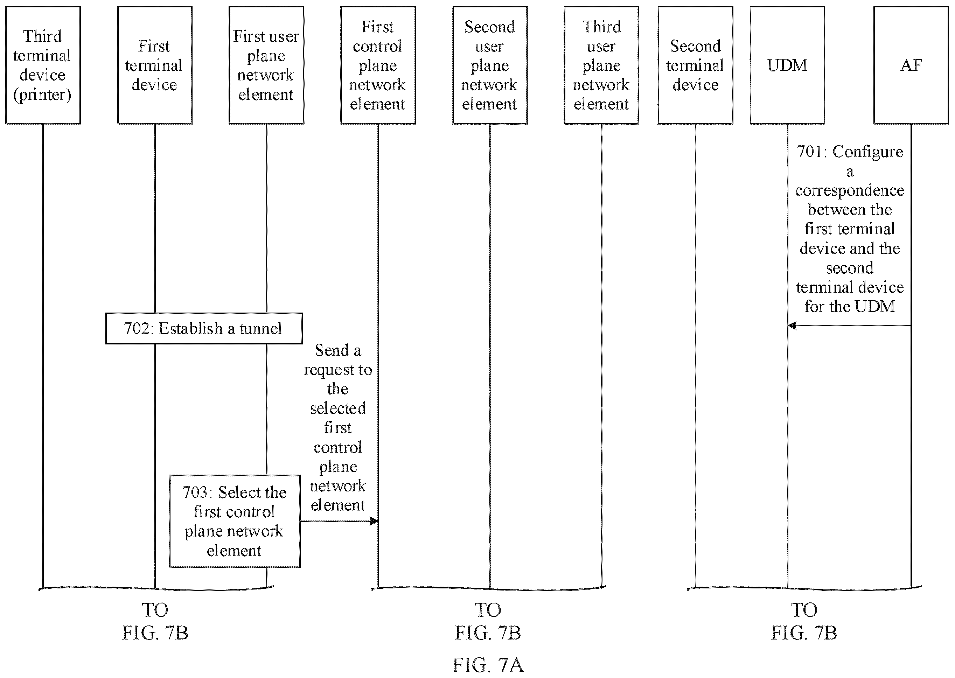

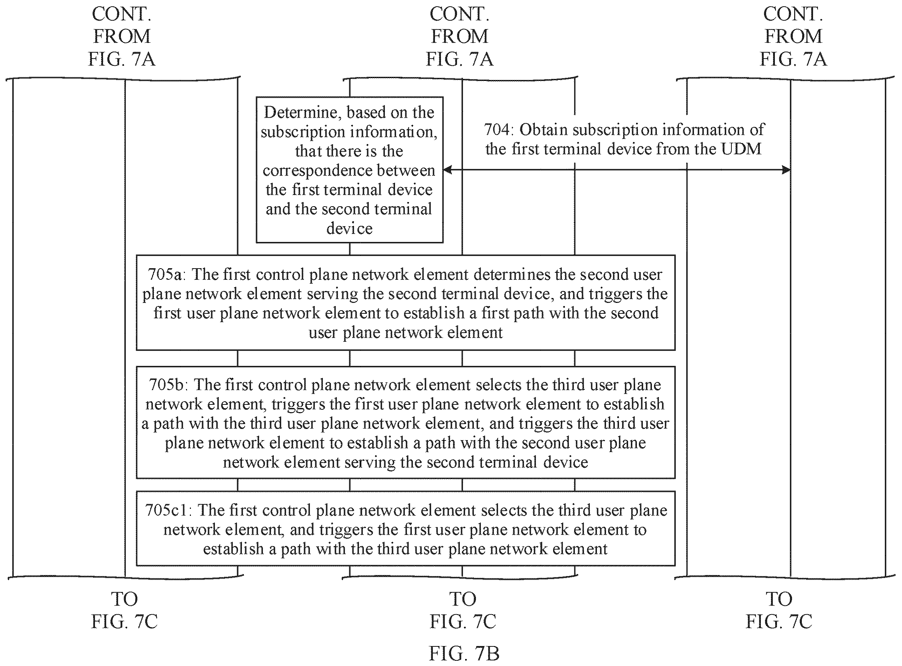

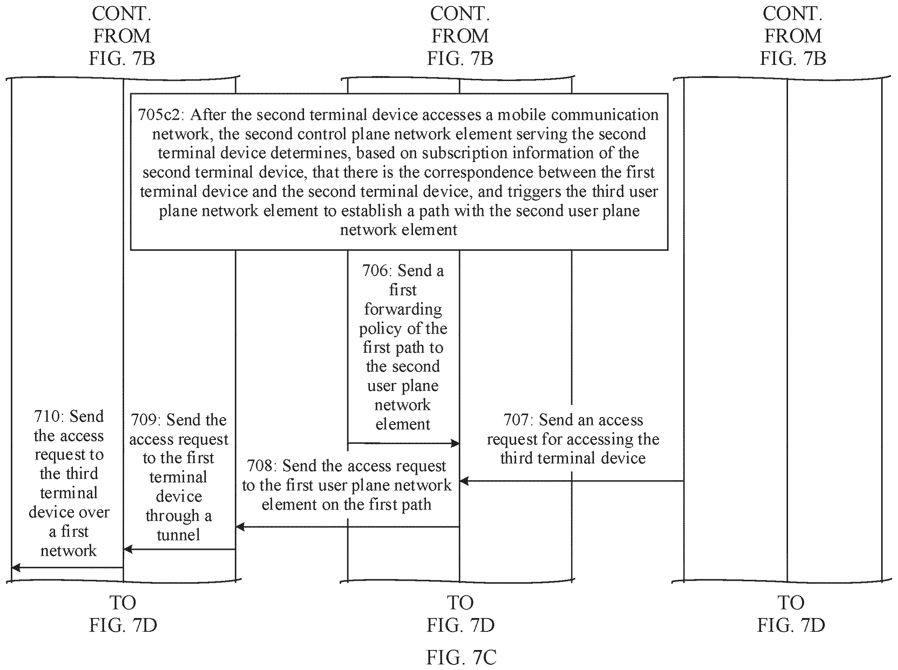

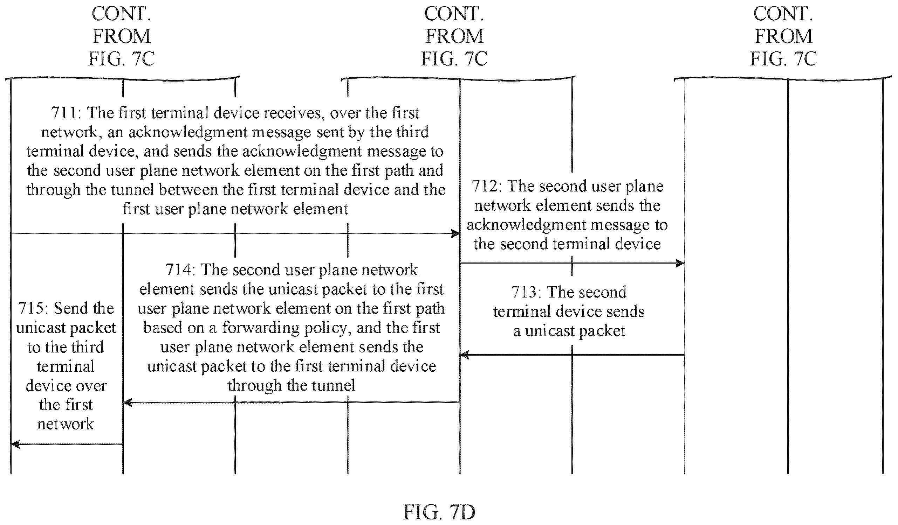

For clearer understanding of the foregoing embodiment of this application, examples are provided below for description with reference to FIG. 7A to FIG. 7D to FIG. 9(b).

FIG. 7A to FIG. 7D are a schematic flowchart of a cross-domain communication method according to an embodiment of this application. As shown in the figure, the procedure relates to a third terminal device (for example, a printer), a first terminal device, a second terminal device, a first user plane network element (for example, a gateway (GW), a packet data gateway (ePDG), or a UPF, and the GW is used as an example in the figure), a second user plane network element (UPF), a first control plane network element (SMF), a UDM, and an application function (AF), and optionally, may further include a third user plane network element.

Specifically, the procedure may include the following steps.

Step 701: The AF configures a correspondence between the first terminal device and the second terminal device for the UDM.

This step is an optional step. The UDM may obtain the correspondence between the first terminal device and the second terminal device from the AF, or may obtain the correspondence between the first terminal device and the second terminal device in another manner. The correspondence between the first terminal device and the second terminal device may be a group relationship, that is, the first terminal device and the second terminal device belong to a same group; or a UE may be a primary device, and the first terminal device and a third terminal device are affiliated to the second terminal device.

Step 702: The first terminal device establishes a tunnel with the first user plane network element.

For example, when the first user plane network element is an ePDG, the first terminal device and the first user plane network element may establish an IP-Sec tunnel based on a conventional technology.

Step 703: The first user plane network element selects the first control plane network element, and sends a request to the selected first control plane network element.

For example, if the first user plane network element has locally configured information about the first control plane network element, the first user plane network element may select a corresponding first control plane network element based on the local configuration information; or the first user plane network element may select, based on a location at which the first user plane network element is deployed in a network, a first control plane network element corresponding to the location.

The first user plane network element sends the request to the selected first control plane network element, so that the first control plane network element establishes a first path for the first terminal device, to transmit a packet for communication between the third terminal device and the second terminal device.

Alternatively, the first user plane network element may select another control plane network element, and then the another control plane network element sends a request to the first control plane network element. The request may be directly sent, or may be sent via a network element, for example, a network exposure function (network exposure function, NEF) in a capability exposure manner.

Step 704: The first control plane network element obtains subscription information of the first terminal device from the UDM, and determines, based on the subscription information, that there is the correspondence between the first terminal device and the second terminal device.

When the second terminal device has accessed a mobile communication network, the first control plane network element may perform step 705a or step 705b. When the second terminal device has not accessed a mobile communication network, the first control plane network element may perform step 705c1 and step 705c2.

Step 705a: The first control plane network element determines the second user plane network element serving the second terminal device, and triggers the first user plane network element to establish the first path with the second user plane network element.

Step 705b: The first control plane network element selects the third user plane network element, triggers the first user plane network element to establish a path with the third user plane network element, and triggers the third user plane network element to establish a path with the second user plane network element serving the second terminal device.

Step 705c1: The first control plane network element selects the third user plane network element, and triggers the first user plane network element to establish a path with the third user plane network element.

Step 705c2: After the second terminal device accesses the mobile communication network, the second control plane network element serving the second terminal device determines, based on subscription information of the second terminal device, that there is the correspondence between the first terminal device and the second terminal device, and triggers the third user plane network element to establish a path with the second user plane network element.

Step 706: The first control plane network element sends a first forwarding policy of the first path to the second user plane network element.

Optionally, the first forwarding policy may include one or more of the following information:
an address of the third terminal device, indicating the second user plane network element to send, to the first user plane network element, a packet whose destination address is the third terminal device;
a first terminal device side address segment, indicating the second user plane network element to send, to the first user plane network element, a packet whose destination address belongs to the first terminal device side address segment;
a forwarding address learning policy, indicating the second user plane network element to perform learning based on a source address of a packet transmitted on the first path, and generate an address forwarding policy used by the second user plane network element to forward a packet;
second indication information, indicating the second user plane network element to send, to the first user plane network element, a broadcast or multicast packet sent by the second terminal device; or
an address reporting policy, indicating the second user plane network element to perform learning based on the source address of a packet transmitted on the first path, and report learned address information to the first control plane network element. For example, the second user plane network element may learn an address of a terminal device in a first network, an address segment of the first network, or prefix information of the first network based on the source address of a packet on the first path.

Optionally, the second control plane network element may send a forwarding policy of the first path to the second user plane network element.

Step 707: The second terminal device sends an access request for accessing the third terminal device.

For example, the second terminal device may send an access discovery packet, and a destination address of the packet may be a multicast address.

Step 708: The second user plane network element sends the access request to the first user plane network element on the first path.

Optionally, after receiving the access request, the second user plane network element may learn a destination address and a source address of the access request, and send learned address information to the first user plane network element.

Step 709: The first user plane network element sends the access request to the first terminal device through the tunnel.

Step 710: The first terminal device sends the access request to the third terminal device over the first network.

Step 711: The first terminal device receives, over the first network, an acknowledgment message sent by the third terminal device, and sends the acknowledgment message to the second user plane network element on the first path and through the tunnel between the first terminal device and the first user plane network element.

Step 712: The second user plane network element sends the acknowledgment message to the second terminal device.

Optionally, after receiving the acknowledgment message, the second user plane network element may learn a source address in the acknowledgment message, and record a correspondence between the source address and the first user plane network element, so that the second user plane network element performs forwarding based on the correspondence in a subsequent packet forwarding process. Further, the second user plane network element may further send learned address information to the first control plane network element.

Step 713: The second terminal device sends a unicast packet, to communicate with the third terminal device. A destination address of the unicast packet may be the address of the third terminal device.

Step 714: The second user plane network element sends the unicast packet to the first user plane network element on the first path based on the forwarding policy, and the first user plane network element sends the unicast packet to the first terminal device through the tunnel.

Step 715: The first terminal device sends the unicast packet to the third terminal device over the first network.

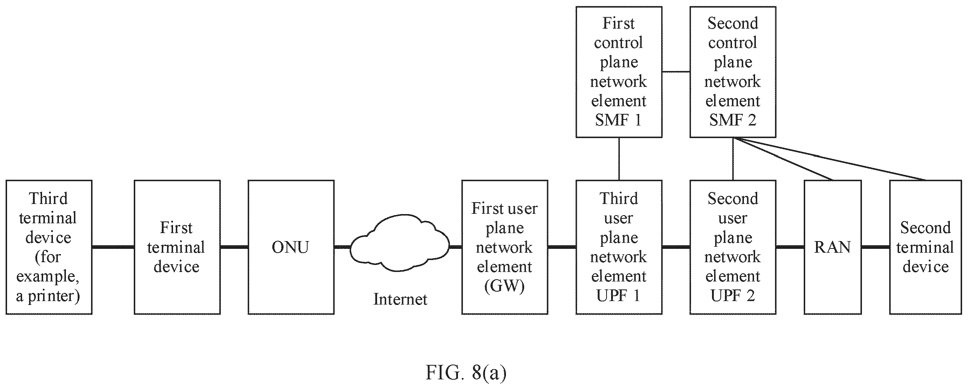

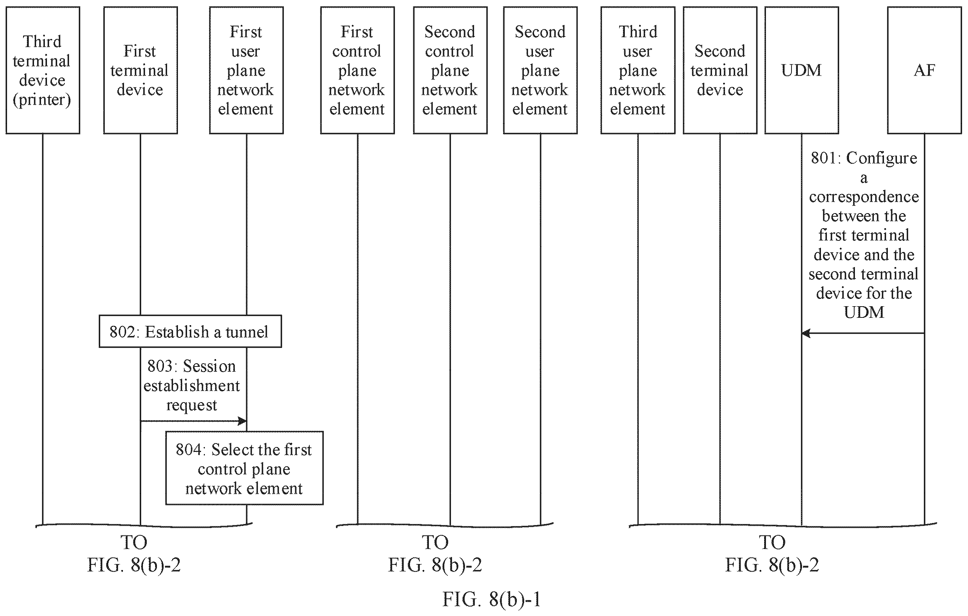

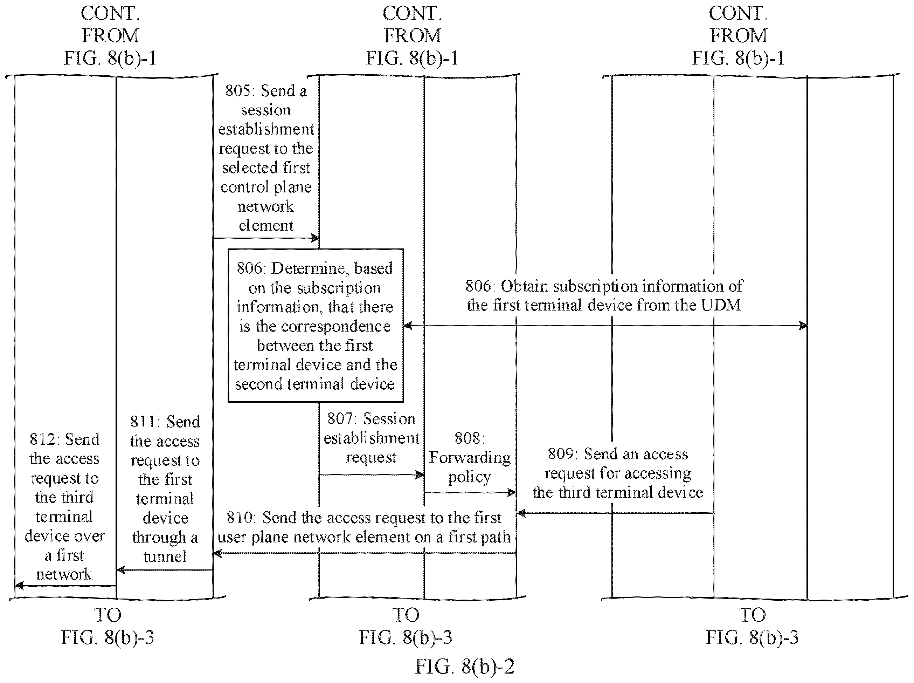

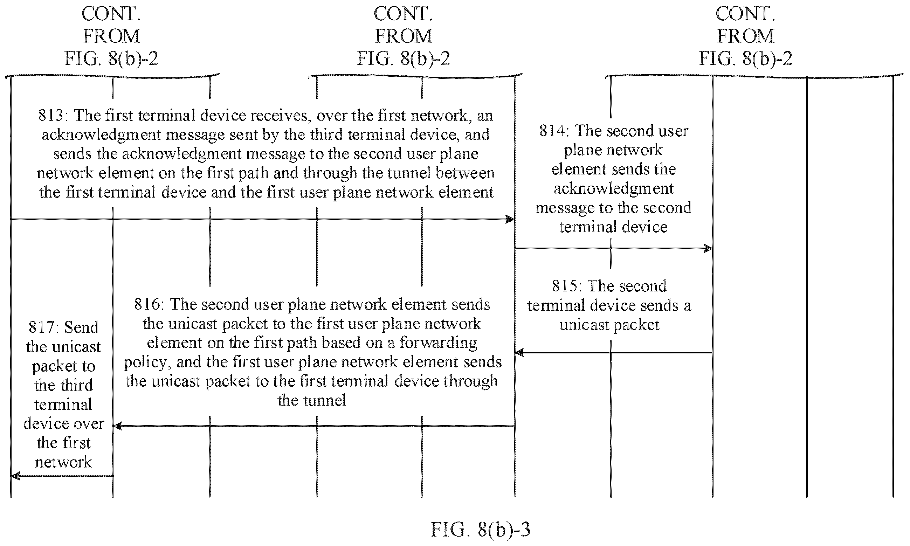

FIG. 8(a) and FIG. 8(b)-1 to FIG. 8(b)-3 are schematic flowcharts of another cross-domain communication scenario and method according to an embodiment of this application. As shown in FIG. 8(a), the procedure relates to a third terminal device (a printer is used as an example in the figure), a first terminal device, a first user plane network element (which may be a gateway (GW), a packet data gateway (ePDG), a UPF, or the like, and the GW is used as an example in the figure), a third user plane network element (UPF 1), a second user plane network element (UPF 2), a first control plane network element, a second control plane network element, a radio access network (RAN/AMF), a second terminal device, a UDM, and an application function (AF).

Specifically, as shown in FIG. 8(b)-1 to FIG. 8(b)-3, the procedure may include the following steps.

Step 801 and step 802 are similar to step 701 and step 702 in the foregoing embodiment. Details are not described herein again.

Step 803: The first terminal device sends a session establishment request to the first user plane network element.

Step 804: The first user plane network element selects the first control plane network element.

For example, the first user plane network element may select a corresponding first control plane network element based on local configuration information, or the first user plane network element may select the first control plane network element based on a data network name (data network name, DNN) in the session establishment request.

Step 805: The first user plane network element sends a session establishment request to the selected first control plane network element.

Step 806: The first control plane network element obtains subscription information of the first terminal device from the UDM, determines, based on the subscription information, that there is the correspondence between the first terminal device and the second terminal device, and determines the second control plane network element serving the second terminal device.

Step 807: The first control plane network element sends a session establishment request to the second control plane network element.

Optionally, the second control plane network element may configure an address segment or prefix information of a first network, and the address segment or prefix information of the first network is used by the first terminal device to allocate an address to another terminal device in the first network. After configuring the address segment or prefix information of the first network, the second control plane network element may send the configured address segment or prefix information to the first control plane network element, so that the first control plane network element sends the address segment or prefix information to the first terminal device. When the terminal device in the first network applies to the first terminal device for address allocation, the first terminal device allocates the address to the terminal device in the first network based on the address segment or prefix information configured by the second control plane network element.

Step 808: The second control plane network element sends a forwarding policy to the second user plane network element.

The forwarding policy is used by the second user plane network element to forward a packet. Optionally, the forwarding policy may include one or more of the following information:
an address of the third terminal device, indicating the second user plane network element to send, to the third user plane network element or the first user plane network element, a packet whose destination address is the third terminal device;
a first terminal device side address segment, indicating the second user plane network element to send, to the third user plane network element or the first user plane network element, a packet whose destination address belongs to the first terminal device side address segment;
a forwarding address learning policy, indicating the second user plane network element to perform learning based on a source address of a packet transmitted on a first path, and generate an address forwarding policy used by the second user plane network element to forward a packet;
second indication information, indicating the second user plane network element to send, to the third user plane network element or the first user plane network element, a broadcast or multicast packet sent by the second terminal device; or
an address reporting policy, indicating the second user plane network element to perform learning based on the source address of a packet transmitted on the first path, and report learned address information to the second control plane network element. For example, the second user plane network element may learn the address of the terminal device in the first network, the address segment of the first network, or the prefix information of the first network based on the source address of a packet on the first path.

Step 809 to step 817 are similar to step 707 to step 715 in the foregoing embodiment. Details are not described herein again.

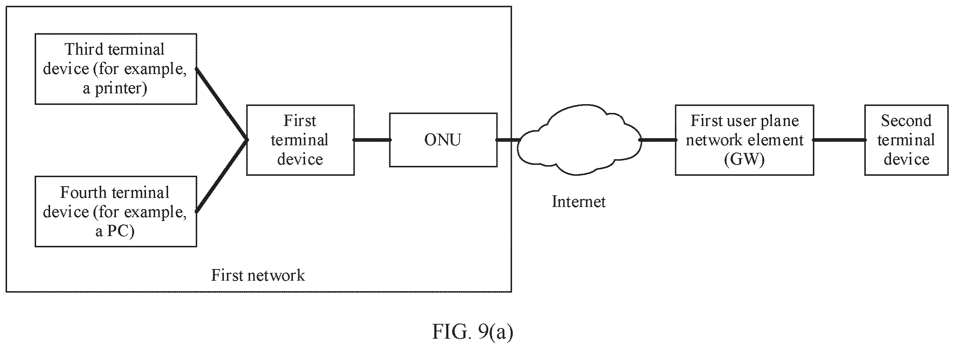

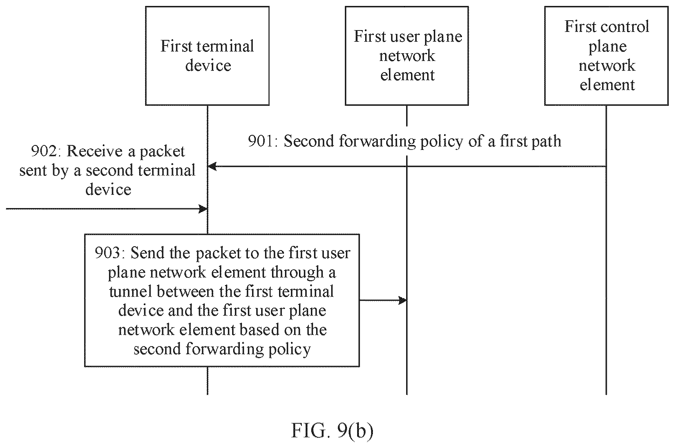

FIG. 9(a) and FIG. 9(b) are schematic flowcharts of still another cross-domain communication scenario and method according to an embodiment of this application. As shown in FIG. 9(a), the procedure relates to a first terminal device, a first user plane network element, and a first control plane network element.

Specifically, as shown in FIG. 9(b), the procedure may include the following steps.

Step 901: The first control plane network element or the first user plane network element sends a second forwarding policy of a first path to the first terminal device.

The second forwarding policy is used by the first terminal device to forward a packet. Optionally, the second forwarding policy may include one or more of the following information: an address of a second terminal device, a feature of data in an uplink tunnel, a protocol type of the data in the uplink tunnel, or a forwarding address learning policy.

Step 902: The first terminal device receives a packet sent by the second terminal device.

Step 903: The first terminal device sends the packet to the first user plane network element through a tunnel between the first terminal device and the first user plane network element based on the second forwarding policy.

For example, if a destination address of the packet received by the first terminal device is the second terminal device, or the packet is a packet that meets the feature of data in an uplink tunnel and the protocol type of the data in the uplink tunnel, the first terminal device sends the packet to the first user plane network element, so that the first user plane network element sends the packet to the second user plane network element on the first path. Therefore, the second user plane network element sends the packet to the second terminal device.

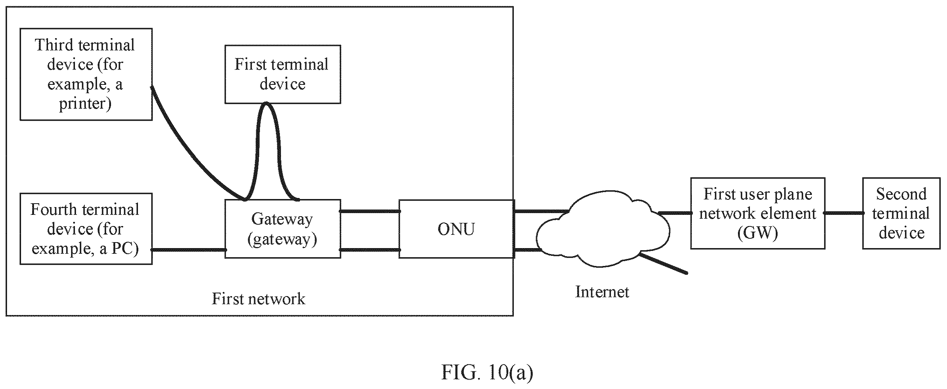

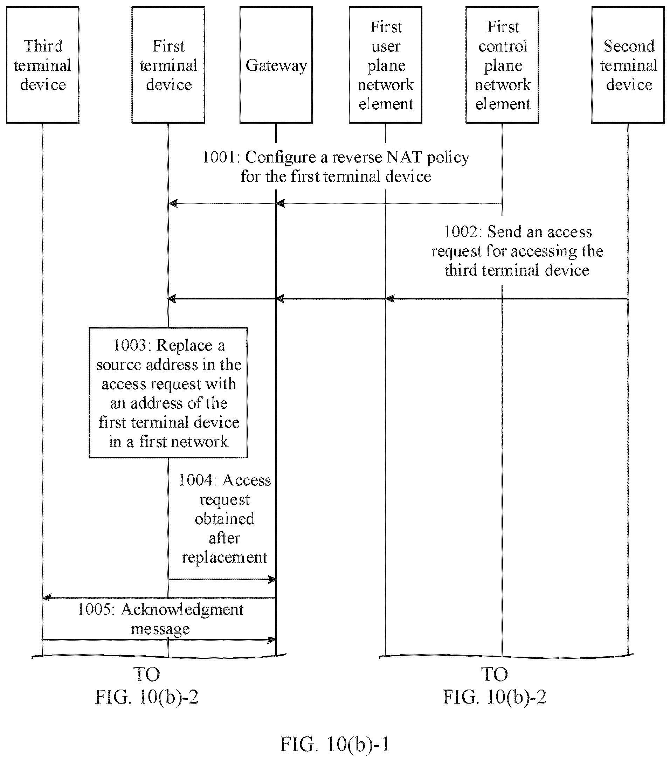

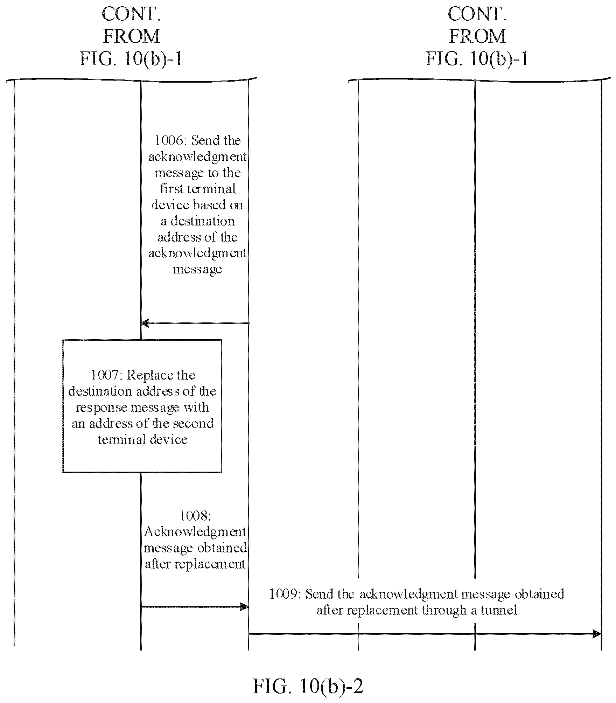

FIG. 10(a) and FIG. 10(b)-1 and FIG. 10(b)-2 are schematic flowcharts of still another cross-domain communication scenario and method according to an embodiment of this application. As shown in FIG. 10(a), the procedure relates to a first terminal device, a first user plane network element, a first control plane network element, and a second terminal device. In the scenario shown in FIG. 10(a), the first terminal device and a gateway in a first network are separately deployed, the first terminal device does not have a gateway function, and when accessing the first network, a terminal device in the first network does not need to rely on the first terminal device for access. After receiving, through a tunnel, a packet sent by the first user plane network element, the gateway device sends the packet to the first terminal device for processing, and then the first terminal device sends the processed packet to the gateway device, so that the gateway device sends the processed packet to a target terminal device (for example, a third terminal device) in the first network. In this scenario, a tunnel between the first terminal device and the first user plane network element is: the first terminal device the gateway device in the first network the first user plane network element.

Specifically, as shown in FIG. 10(b)-1 and FIG. 10(b)-2, the procedure may include the following steps.

Step 1001: The first control plane network element or the first user plane network element configures a reverse NAT policy for the first terminal device.

The reverse NAT policy is that after receiving a packet from the first user plane network element through a tunnel, the first terminal device replaces a source address in the packet with an address of the first terminal device used in a first network. Optionally, the first terminal device may further replace a source port number. Optionally, the first terminal device may further learn source address information of a packet received through the tunnel.

Step 1001 is an optional step. The first terminal device may also locally configure the reverse NAT policy.

Step 1002: The second terminal device initiates an access request for accessing the third terminal device.

For example, the second terminal device may send an access discovery packet, and a destination address of the packet may be a multicast address. After receiving the access request, the second user plane network element may learn a destination address and a source address of the access request, send learned address information to the first user plane network element, and send the access request to the first user plane network element on a first path. The first user plane network element sends the packet to the first terminal device through the tunnel between the first user plane network element and the first terminal device.

Step 1003: The first terminal device replaces the source address in the access request with the address of the first terminal device used in the first network.

For example, the first terminal device may parse a tunnel header of the access request to obtain the source address, and replace the source address with an address H-IP3 of the first terminal device in the first network. Optionally, the first terminal device may further replace a source port number in the access request, and replace the source port number with a port number of the first terminal device. In addition, the first terminal device records a correspondence between the source address and the port number obtained before replacement and the address and the port number obtained after replacement.

Step 1004: The first terminal device sends the access request obtained after replacement to the gateway device in the first network, and the gateway device in the first network forwards the access request.

For example, if the access request is a multicast packet, the gateway device in the first network may send the access request to the target terminal device, that is, the third terminal device, in a multicast manner.

Step 1005: The third terminal device sends an acknowledgment message.

Because the acknowledgment message is used to response the access request obtained after replacement, and the source address in the access request obtained after replacement is the address H-IP3 of the first terminal device in the first network, a destination address of the acknowledgment message is the address H-IP3 of the first terminal device in the first network.

Step 1006: The gateway device in the first network sends the acknowledgment message to the first terminal device based on the destination address of the acknowledgment message.

Step 1007: The first terminal device replaces the destination address of the acknowledgment message with an address of the second terminal device.

Step 1008: The first terminal device sends the acknowledgment message obtained after replacement to the gateway device in the first network.

Step 1009: The gateway device in the first network sends the acknowledgment message obtained after replacement through the tunnel.

The first user plane network element receives the acknowledgment message obtained after replacement through the tunnel between the first user plane network element and the first terminal device, and then sends the acknowledgment message obtained after replacement to the second user plane network element on the first path, so that the second user plane network element sends the acknowledgment message obtained after replacement to the second terminal device.

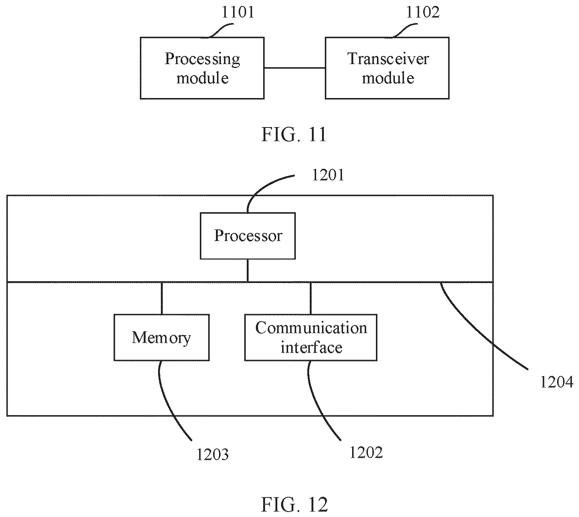

Based on a same technical concept, an embodiment of this application further provides a communication apparatus, configured to implement the method embodiments. The communication apparatus may be shown in FIG. 11, and includes a processing module 1101 and a transceiver module 1102. The processing module 1101 is configured to implement data processing performed by the communication apparatus. The transceiver module 1102 is configured to receive content between the communication apparatus and another unit or network element, or send content between the communication apparatus and another unit or network element. It should be understood that the processing module 1101 in this embodiment of this application may be implemented by a processor or a processor-related circuit component (or referred to as a processing circuit), and the transceiver module 1102 may be implemented by a receiver, a receiver-related circuit component, a transmitter, or a transmitter-related circuit component.

For example, the communication apparatus may be a communication apparatus device, or may be a chip used in the communication apparatus device or another combined device or component with a function of the communication apparatus device.

When the communication apparatus is a first control plane network element, the processing module 1101 is configured to trigger, via the transceiver module 1102 based on an association relationship between a first terminal device and a second terminal device, a first user plane network element to establish a path with a second user plane network element, where the path is used to transmit a packet from the first terminal device to the second user plane network element, or is used to transmit a packet from the second terminal device to the first user plane network element.

In addition, the foregoing modules may be further configured to support another process performed by the first control plane network element in embodiments shown in FIG. 6 to FIG. 10(b)-1 and FIG. 10(b)-2. For beneficial effect, refer to the foregoing descriptions. Details are not described herein again.

When the communication apparatus is a first user plane network element, the processing module 1101 is configured to establish a path with a second user plane network element via the transceiver module 1102, where the path is used to transmit a packet from a first terminal device to the second user plane network element, or is used to transmit a packet from a second terminal device to the first user plane network element, and the second user plane network element serves the second terminal device.

In addition, the foregoing modules may be further configured to support another process performed by the first user plane network element in embodiments shown in FIG. 6 to FIG. 10(b)-1 and FIG. 10(b)-2. For beneficial effect, refer to the foregoing descriptions. Details are not described herein again.

When the communication apparatus is a first terminal device, the processing module 1101 is configured to: establish a tunnel with a first user plane network element via the transceiver module 1102; and send, by the first terminal device, a packet whose target address is a second terminal device to the first user plane network element based on a forwarding policy; or replace a source address in a packet from the second terminal device with an address of the first terminal device used in a first network, and then forward the packet to a target terminal device, where the first terminal device and the target terminal device are devices in the first network, the first network is different from a network to which a first control plane network element belongs, and the second terminal device is associated with the first terminal device.

In addition, the foregoing modules may be further configured to support another process performed by the first terminal device in embodiments shown in FIG. 6 to FIG. 10(b)-1 and FIG. 10(b)-2. For beneficial effect, refer to the foregoing descriptions. Details are not described herein again.

FIG. 12 is a diagram of another communication apparatus according to an embodiment of this application. The communication apparatus includes a processor 1201, a communication interface 1202, and a memory 1203. The processor 1201, the communication interface 1202, and the memory 1203 may be connected to each other through a bus 1204. The bus 1204 may be a peripheral component interconnect (peripheral component interconnect, PCI) bus, an extended industry standard architecture (extended industry standard architecture, EISA) bus, or the like. The bus 1204 may be classified into an address bus, a data bus, a control bus, and the like. For ease of representation, only one line is used in FIG. 12 for representation, but it does not indicate that there is only one bus or only one type of bus. The processor 1201 may be a central processing unit (central processing unit, CPU), a network processor (network processor, NP), or a combination of a CPU and an NP. The processor may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (Generic Array Logic, GAL), or any combination thereof. The memory 1203 may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache.

For example, the communication apparatus may be the first control plane network element in FIG. 6 to FIG. 10(b), or may be the first user plane network element in FIG. 6 to FIG. 10(b)-1 and FIG. 10(b)-2, or may be the first terminal device in FIG. 6 to FIG. 10(b)-1 and FIG. 10(b)-2, or may be the second user plane network element in FIG. 6 to FIG. 10(b)-1 and FIG. 10(b)-2.

The processor 1201 is configured to implement a data processing operation of the communication apparatus. The communication interface 1202 is configured to implement a receiving operation and a sending operation of the communication apparatus.

When the communication apparatus is a first control plane network element, the processor 1201 is configured to trigger, through the communication interface 1202 based on an association relationship between a first terminal device and a second terminal device, a first user plane network element to establish a path with a second user plane network element, where the path is used to transmit a packet from the first terminal device to the second user plane network element, or is used to transmit a packet from the second terminal device to the first user plane network element, and the second user plane network element serves the second terminal device.

In addition, the foregoing components may be further configured to support another process performed by the first control plane network element in embodiments shown in FIG. 6 to FIG. 10(b)-1 and FIG. 10(b)-2. For beneficial effect, refer to the foregoing descriptions. Details are not described herein again.

When the communication apparatus is a first user plane network element, the processor 1201 is configured to establish a path with a second user plane network element through the communication interface 1202, where the path is used to transmit a packet from a first terminal device to the second user plane network element, or is used to transmit a packet from a second terminal device to the first user plane network element, and the second user plane network element serves the second terminal device.

In addition, the foregoing components may be further configured to support another process performed by the first user plane network element in embodiments shown inFIG. 6 to FIG. 10(b)-1 and FIG. 10(b)-2.. For beneficial effect, refer to the foregoing descriptions. Details are not described herein again.

When the communication apparatus is a first terminal device, the processor 1201 is configured to: establish a tunnel with a first user plane network element through the communication interface 1202; and send, by the first terminal device, a packet whose target address is a second terminal device to the first user plane network element based on a forwarding policy; or replace a source address in a packet from the second terminal device with an address of the first terminal device used in a first network, and then forward the packet to a target terminal device, where the first terminal device and the target terminal device are devices in the first network, the first network is different from a network to which a first control plane network element belongs, and the second terminal device is associated with the first terminal device.

In addition, the foregoing components may be further configured to support another process performed by the first terminal device in embodiments shown in FIG. 6 to FIG. 10(b)-1 and FIG. 10(b)-2. For beneficial effect, refer to the foregoing descriptions. Details are not described herein again.

Based on a same technical concept, an embodiment of this application further provides a communication system, including the first control plane network element, the first user plane network element, and the first user equipment in the foregoing embodiments, and may further include the second user plane network element and/or the second control plane network element.

Based on a same technical concept, an embodiment of this application further provides a computer-readable storage medium. The computer-readable storage medium stores computer-readable instructions. When the computer-readable instructions run on a computer, the method according to any one of the foregoing possible implementations is performed.

An embodiment of this application provides a computer program product including instructions. The instructions, when executed on a computer, cause the method provided in the above embodiments to be performed.

In descriptions of embodiments of this application, the term "and/or" describes an association relationship between associated objects and indicates that three relationships may exist. For example, A and/or B may indicate the following three cases: Only A exists, both A and B exist, and only B exists. "A plurality of" in this application means two or more.

In addition, it should be understood that in description of this application, terms such as "first" and "second" are merely used for distinguishing and description, but should not be understood as indicating or implying relative importance, or should not be understood as indicating or implying a sequence. Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a base station or a terminal. Certainly, the processor and the storage medium may exist in a base station or terminal as discrete components.

All or a part of the foregoing embodiments may be implemented by using software, hardware, firmware, or any combination thereof. When software is used to implement embodiments, all or a part of embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions between different embodiments are consistent and may be mutually referenced, and technical features in different embodiments may be combined into a new embodiment based on an internal logical relationship thereof.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A cross-domain communication method, wherein the method comprises:
triggering, by a first control plane network element based on an association relationship between a first terminal device and a second terminal device, a first user plane network element to establish a path with a second user plane network element, wherein the first user plane network element is a user plane network element serving the first terminal device, and the second user plane network element is a user plane network element serving the second terminal device, and
the path is used to transmit a packet from the first terminal device to the second user plane network element, or is used to transmit a packet from the second terminal device to the first user plane network element.

2. The method according to claim 1, wherein the method further comprises:
receiving, by the first control plane network element, address information, wherein the address information comprises an address of a third terminal device and/or a first terminal device side address segment, and the third terminal device is a terminal device that forwards a packet via the first terminal device; and
generating, by the first control plane network element, a first forwarding policy based on the address information.

3. The method according to claim 2, wherein the method further comprises:
sending, by the first control plane network element, the first forwarding policy to the second user plane network element, wherein the first forwarding policy indicates the second user plane network element to send, to the second terminal device, a packet from the first terminal device, or to send, to the first user plane network element, a packet that is sent by the second terminal device and whose target address belongs to the first terminal device side address segment.

4. The method according to claim 2 or 3, wherein the first terminal device side address segment comprises a broadcast address, a multicast address, or an address of a terminal device that is other than the first terminal device and that is in a first network to which the first terminal device belongs.

5. The method according to claim 3, wherein the first forwarding policy comprises:
first indication information, indicating the second user plane network element to generate an address forwarding policy based on a source address of a packet transmitted on the path; and/or
second indication information, indicating the second user plane network element to send, to the first user plane network element, a packet sent by the second terminal device.

6. The method according to any one of claims 1 to 5, wherein the method further comprises:
sending, by the first control plane network element, a second forwarding policy to the first terminal device, wherein the second forwarding policy indicates the first terminal device to send a packet whose target address is an address of the second terminal device to the first user plane network element, or to replace a source address in a packet from the second terminal device with an address of the first terminal device used in a first network, and then forward the packet to a target terminal device, wherein the first terminal device and the target terminal device are devices in the first network, and the first network is different from a network to which the first control plane network element belongs.

7. The method according to claim 6, wherein the second forwarding policy comprises an uplink data forwarding policy, and the uplink data forwarding policy is used to determine whether to send an uplink packet to the first user plane network element; and
the uplink data forwarding policy comprises one or more of the following information: a feature of data in an uplink tunnel, a protocol type of the data in the uplink tunnel, or third indication information.

8. The method according to claim 7, wherein the feature of the data comprises: a broadcast packet, a multicast packet, or a packet whose target address is the second terminal device; and/or
the third indication information indicates the first terminal device to record a correspondence between a first address and the first user plane network element when receiving a downlink packet via the first user plane network element, wherein the first address is a source address of the downlink packet, so that when receiving an uplink packet whose target address is the first address, the first terminal device sends the uplink packet to the first user plane network element.

9. The method according to any one of claims 1 to 8, wherein triggering, by the first control plane network element based on the association relationship between the first terminal device and the second terminal device, the first user plane network element to establish the path with the second user plane network element comprises:
determining, by the first control plane network element, a third user plane network element, and triggering the first user plane network element to establish a path with the third user plane network element; and
sending, by the first control plane network element, a first request to a second control plane network element, wherein the first request is used to request the second control plane network element to trigger the third user plane network element to establish a path with the second user plane network element.

10. The method according to claim 9, wherein the method further comprises:
sending, by the first control plane network element, a third forwarding policy to the third user plane network element, wherein the third forwarding policy indicates the third user plane network element to send, to the second user plane network element, a packet from the first terminal device, or to send, to the first user plane network element, a packet that is sent by the second terminal device and whose target address belongs to a first terminal device side address segment.

11. The method according to claim 10, wherein the third forwarding policy comprises:
fourth indication information, indicating the third user plane network element to generate an address forwarding policy based on a source address of a packet transmitted on the path; and/or
fifth indication information, indicating the third user plane network element to send, to the first user plane network element, a packet sent by the second terminal device.

12. The method according to any one of claims 1 to 11, wherein before triggering, by the first control plane network element based on the association relationship between the first terminal device and the second terminal device, the first user plane network element to establish the path with the second user plane network element, the method further comprises:
receiving, by the first control plane network element, a second request, wherein the second request is used to establish the path for the first terminal device, and obtaining, by the first control plane network element, the association relationship; or
receiving, by the first control plane network element, a third request, wherein the third request is used to establish the path for the second terminal device, and obtaining, by the first control plane network element, the association relationship.

13. A cross-domain communication method, wherein the method comprises:
establishing, by a second user plane network element, a path with a first user plane network element, wherein the first user plane network element serves a first terminal device, and the second user plane network element serves a second terminal device; and
sending, by the second user plane network element to the second terminal device, a packet received from the first terminal device via the path; and/or
sending, by the second user plane network element to the first user plane network element via the path, a packet from the second terminal device.

14. The method according to claim 13, wherein the method further comprises:
obtaining, by the second user plane network element, an address of a third terminal device and/or a first terminal device side address segment based on a source address of a packet transmitted on the path, wherein the third terminal device is a terminal device that forwards a packet via the first terminal device; and
sending, by the second user plane network element, the address of the third terminal device and/or the first terminal device side address segment to a first control plane network element.

15. The method according to claim 13 or 14, wherein the method further comprises:
receiving, by the second user plane network element, a forwarding policy that is of the path and that is sent by a first control plane network element; and
sending, by the second user plane network element, a packet from the first terminal device to the second terminal device based on the forwarding policy of the path, or sending, to the first user plane network element on the path, a packet that is sent by the second terminal device and whose target address belongs to a first terminal device side address segment.

16. The method according to claim 15, wherein the first terminal device side address segment comprises a broadcast address, a multicast address, or an address of a terminal device in a first network to which the first terminal device belongs.

17. The method according to claim 15 or 16, wherein the forwarding policy of the path comprises:
a learning policy, wherein the learning policy indicates the second user plane network element to learn a source address of a packet transmitted on the path, and generate an address forwarding policy based on an address obtained through learning; and/or
second indication information, wherein the second indication information indicates the second user plane network element to send, to the first user plane network element, a packet sent by the second terminal device.

18. A cross-domain communication method, wherein the method comprises:
establishing, by a first terminal device, a tunnel with a first user plane network element; and
sending, by the first terminal device to the first user plane network element based on a forwarding policy, a packet whose target address is a second terminal device; or replacing a source address in a packet from the second terminal device with an address of the first terminal device used in a first network, and then forwarding the packet to a target terminal device, wherein the first terminal device and the target terminal device are devices in the first network, the first network is different from a network to which a first control plane network element belongs, and the second terminal device is associated with the first terminal device.

19. The method according to claim 18, wherein the forwarding policy is sent by the first user plane network element or the first control plane network element, and the first control plane network element is a control plane network element serving the first terminal device.

20. The method according to claim 19, wherein the forwarding policy comprises an uplink data forwarding policy, and the uplink data forwarding policy comprises one or more of the following information: a feature of data in an uplink tunnel, a protocol type of the data in the uplink tunnel, or a learning policy.

21. The method according to claim 20, wherein the feature of the data comprises: a broadcast packet, multicast data, or a packet whose target address is the second terminal device; and/or
the learning policy indicates the first device to record a correspondence between a first address and the first user plane network element when receiving a downlink packet via the first user plane network element, wherein the first address is a source address of the downlink packet, so that when receiving an uplink packet whose target address is the first address, the first terminal device sends the uplink packet to the first user plane network element.

22. A cross-domain communication method, wherein the method comprises:
triggering, by a first control plane network element based on an association relationship between a first terminal device and a second terminal device, a first user plane network element to establish a path with a second user plane network element, wherein the first user plane network element is a user plane network element serving the first terminal device, and the second user plane network element is a user plane network element serving the second terminal device; and
establishing, by the first user plane network element, the path with the second user plane network element, wherein the path is used to transmit a packet from the first terminal device to the second user plane network element, or is used to transmit a packet from the second terminal device to the first user plane network element.

23. The method according to claim 22, wherein the method further comprises:
establishing, by the first terminal device, a tunnel with the first user plane network element; and
sending, by the first terminal device, a packet whose target address is the second terminal device to the first user plane network element based on a forwarding policy; or
replacing a source address in a packet from the second terminal device with an address of the first terminal device used in a first network, and then forwarding the packet to a target terminal device, wherein the first terminal device and the target terminal device are devices in the first network, and the first network is different from a network to which the first control plane network element belongs.

24. A communication device, comprising a processor, and a memory and a communication interface that are separately coupled to the processor, wherein the communication interface is configured to communicate with another device; and the processor is configured to: run instructions or a program in the memory, and perform, through the communication interface, the method according to any one of claims 1 to 12.

25. A communication device, comprising a processor, and a memory and a communication interface that are separately coupled to the processor, wherein the communication interface is configured to communicate with another device; and the processor is configured to: run instructions or a program in the memory, and perform, through the communication interface, the method according to any one of claims 13 to 17.

26. A communication device, comprising a processor, and a memory and a communication interface that are separately coupled to the processor, wherein the communication interface is configured to communicate with another device; and the processor is configured to: run instructions or a program in the memory, and perform, through the communication interface, the method according to any one of claims 18 to 21.

27. A communication system, wherein the communication system comprises the communication device according to claim 24, the communication device according to claim 25, and the communication device according to claim 26.

28. A computer-readable storage medium, wherein the computer-readable storage medium stores instructions, and when the instructions run on a computer, the computer is enabled to perform the method according to any one of claims 1 to 23.

29. A computer program product comprising instructions, wherein when the instructions run on a computer, the computer is enabled to perform the method according to any one of claims 1 to 23.

30. A communication apparatus, comprising a module configured to perform the method according to any one of claims 1 to 21.
